# EUROPÄISCHE PATENTSCHRIFT

(11) **EP 0 550 386 B1**
(45) Veröffentlichungstag und Bekanntmachung des Hinweises auf die Patenterteilung: **16.08.1995**
(21) Anmeldenummer: 92811007.1
(22) Anmeldetag: 16.12.1992
(51) Int. Cl.: G01C 17/06

(54) **Neigungskompensierender Kompass**
Tilt compensating compass
Compas à compensation d'inclinaison

(30) Priorität: 30.12.1991 CH 3863/91
(43) Veröffentlichungstag der Anmeldung: 07.07.1993
(73) Patentinhaber: RECTA AG, 2501 Biel (CH)
(72) Erfinder: Gloor, Hans, CH-2504 Biel (CH); Gigon, Denis, CH-2502 Biel (CH)
(74) Vertreter: Twelmeier, Ulrich, Dipl.Phys.

(56) Entgegenhaltungen:
- AT-A- 328 760
- CH-A- 663 091
- DE-C- 173 956
- PATENT ABSTRACTS OF JAPAN vol. 7, no. 241 (P-232)(1386) 26. Oktober 1983 & JP-A-58129209

## Beschreibung

Die Erfindung betrifft einen neigungskompensierenden Kompass mit einer mechanischen Anzeige und einem aus einem Permanentmagnetsystem bestehenden Magnetfelddetektor, die in einem Gehäuse mit Boden und Deckel untergebracht sind, in dem Vakuum herrscht oder das mit einer Flüssigkeit oder mit einem Gas gefüllt ist. Der Magnetfelddetektor ist auf einem Spitzenlager gelagert.

Durch die CH 663 091 A5 ist ein neigungskompensierender Kompass bekannt. Dieser Kompass umfasst eine drehbar gelagerte Magnetnadel, an der Mittel angebracht sind, deren Masseschwerpunkt vom Rotationszentrum der Magnetnadel weiter entfernt ist als der Schwerpunkt der Magnetnadel. Hierdurch wird eine Rückstellung der Nadel durch ein zusätzliches Kraftmoment bewirkt.

Muss bei einer Ausbalancierung einer Kompassnadel die von der geographischen Lage des Verwendungsortes abhängige Inklination berücksichtigt werden, so schlägt die AT-A-328 760 vor; entweder den Zeiger oder das Lager mit einem Schlitz auszubilden, dessen Längsachse parallel zur Längsmittelachse des Zeigers verläuft, wobei der jeweils andere Teil an einer vorbestimmten Stelle im Schlitz befestigt ist.

Eine nach der AT-A-328 760 ausbalancierte Nadel kann unter Umständen an einem anderen Verwendungsort den Boden oder den Deckel des Kompasses berühren.

Ferner ist durch die JP-A-58 129 209 ein Kompass mit einer auf einem Spitzenlager gelagerten Kompassnadel bekannt.

Bei einem üblichen mechanischen Kompass ist die Anzeige direkt mit dem Magnetsystem verbunden oder mit diesem identsich. Bei flachen Kompassdosen hat dies den grossen Nachteil, dass schon bei relativ kleinen Neigungen (8-12°) des Kompasses ausserhalb der Horizontalen, die Anzeige den Deckel oder den Boden berührt. Ein ähnlicher störender Effekt kann auch bei einer Anwendung des Kompasses in verschiedenen Breitengraden durch unterschiedliche Inklinationen des Magnetfeldes der Erde entsthen. Dadurch ist der Kompass nicht mehr funktionstüchtig oder er muss zuerst in eine Lage gebracht werden, in der die Anzeige wieder frei schwingen kann. Bei vielen Anwendungen, wie z.B. bei Orientierungsläufen ist es aber von grosser Wichtigkeit, dass die Richtung möglichst rasch abgelesen werden kann.

Der Erfindung liegt deshalb die Aufgabe zugrunde, den bekannten Kompass so weiterzubilden, dass auch bei grösseren Neigungen eine einwandfreie Anzeige geliefert wird und letztere unabhängig von der Neigung des Kompasses bzw. eines Magnetfelddetektors funktioniert.

Dies wird durch die Merkmale des Anspruchs 1 erreicht. Vorteilhafte Weiterbildungen sind Gegenstand der Unteransprüche. Im Gegensatz zum Stand der Technik wird bei dem erfindungsgemäßen Kompass vorgeschlagen die Anzeige von dem Magnetfelddetektor zunächst zu trennen und anschließend die Anzeige und den Magnetfelddetektor durch einen Mitnehmer und durch ein Gegenstück miteinander zu verbinden. Die Verbindung des Mitnehmers mit dem Gegensück erfolgt dadurch, dass der Mitnehmer oder das Gegenstück, der bzw. das mit dem Magnetfelddetektor verbunden ist, eine Längsachse hat, die durch den Rotationspunkt des Lagers des Magnetfelddetektors geht und dass der Mitnehmer oder das Gegenstück, der bzw. das mit dem Magnetfelddetektor verbunden ist, nur in der Neigungsricktung des Lagers des Magnetfelddetektors frei bewegbar ist.

Der Magnetfelddetektor kann entweder aus einem oder mehreren Permanentmagneten oder aus einer Basis, auf der ein Permanentmagnetsystem aufgebaut ist, bestehen. Der Teil, welcher das Spitzenlager umfasst, ist von Vorteil konisch oder degagiert ausgebildet, damit bei einer Neigung des gehäuses die Basis oder der Magnetfelddetektor die Verlängerung des Spitzenlagers nicht berührt .

Auf dem Deckel oder auf dem Boden kann eine drehbare Referenzscheibe montiert sein, die z.B. eine Voreinstellunglung einer Zieleinrichtung oder den geographischen Nordpol anzeigt. Meistens enthalten Kompasse eine Flüssigkeit. Damit diese auch bei extremen Temperaturen funktionsfähig sind, ist es von Vorteil, eine Luftblase einzubauen an einem Ort, der die Bewegungsfreiheit der Anzeige nicht stört. Die Neigung des Permanentkann ausgewertet werden zur Messung der Neigung des Kompasses oder des vertikalen Erdfeldes. Die Messung kann auch optisch mittels Photozellen, magnetisch oder elektrisch mittels Kapazitätsänderungen erfolgen. Es ist jedoch wichtig, dass bei der Herstellung der Magnetfelddetektor so ausbalanciert ist, dass das System möglichst horizontal eingestellt ist. Dies ist einfach zu lösen, wenn die Basis mit dem Permanentmagnet oder das Magnetsystem selber ein Langloch aufweist, so dass es dezentrisch montiert werden kann und die Unwucht das vertikale Erdfeld ausgleicht. Ein kleines Gegengewicht kann auch auf dem Mitnehmer oder auf dem Gegenstück, das auf dem Magnetfelddetektor montiert ist angebracht werden, um dem Magnetfelddetektor an einem definierten Ort der Erde möglichst horizontal auszubalancieren. Die Anzeige kann durch einen Zeiger, eine Nadel, eine Kreisscheibe mit zirkularen oder radialen Markierungen erfolgen. So ist es möglich den mechanischen Kompass zusätzlich mit einer elektrischen Anzeige, digital oder analog, auszustatten, indem die aufgezeichnete Kodierung mit elektrooptischen Mitteln abgelesen wird. Da die Magnetfelddetektion im Durchmesser kleiner ist als die Anzeige kann der Durchmesser des Gehäuses in diesem Bereich stufenweise verkleinert werden.

Ein Beispiel der Erfindung ist in den Figuren dargestellt.
- Figur 1: zeigt einen Schnitt durch einen Kompass,
- Figur 2: zeigt eine Ansicht eines Mitnehmers.

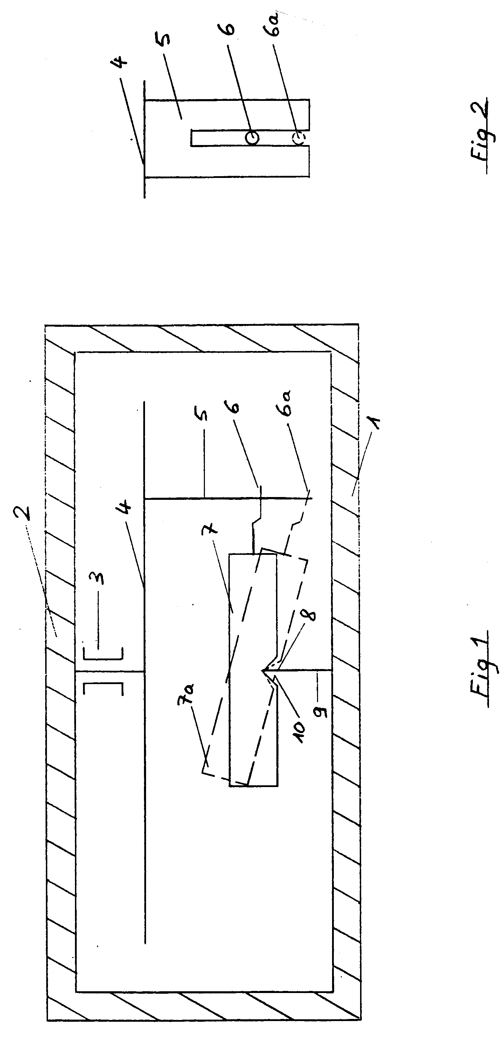

Figur 1 stellt einen Kompass dar mit einem Gehäuse aus einem Boden 1 und einem Deckel 2. Am Deckel 2 ist ein Lager 3 montiert an dem sich die Anzeige 4 frei drehen kann. Auf dem Boden ist ein Spitzenlager 8 mit einer Verlängerung 9 montiert. Auf dem Spitzenlager 8 befindet sich der Magnetfelddetektor 7, der bei einer Neigung eine Lage 7a einnehmen kann. Der Magnetfelddetektor 7 ist in der Nähe des Spitzenlagers 8 konisch 10 ausgebildet, damit bei grösseren Neigungen des Magnetfelddetektors 7 dieser die Verlängerung des Spitzenlagers 8 nicht berührt. Ein Mitnehmer 6 ist an dem Magnetfelddetektor befestigt, dessen Achse bezogen auf den Kontaktbereich Mitnehmer/Gegenstück genau durch den Rotationspunkt des Lagers 8 führt. Wenn nun dieser Mitnehmer die Stellung 6a inne hat ergibt sich keine Änderung des Winkels der Anzeige 4. Der Mitnehmer 6 greift in eine Gabel des Gegenstücks 5 ein, das mit der Anzeige 4 verbunden ist.

Figur 2 zeigt zwei Stellungen des Mitnehmers 6 und 6a ohne dass dadurch das Gegenstück 5 mit der Anzeige 4 verschoben wird. Auch eine Neigung des Magnetfelddetektors rechtwinklig zur Darstellung der Figur 1 bewirkt keine Verschiebung der Anzeige.

Da der Magnetfelddetektor im Durchmesser kleiner ist als die Anzeige, kann das Gehäuse in diesem Bereich eine Stufe aufweisen mit einem reduzierten Durchmesser.

Da zwischen dem Lager 3 und der Anzeige 4 Raum vorhanden ist, kann dieser benützt werden um in einem Käfig eine Luftblase einzuschliessen. Dadurch wird der Temperaturbereich der Anwendung des Kompasses wesentlich erweitert und/oder die Toleranzen bei der Herstellung vergrössert. Auf dem Boden 1 könnten auf einem Kreis der dem äusseren Durchmesser des Magnetfelddetektors entspricht, mehrere Magnetfeldsonden oder kapazitive Elemente angebracht werden mit denen der Abstand bzw. die Neigung des Magnetfelddektors 7 elektrisch festgestellt wird. Ein Anzeige würde die Lage des Kompasses oder die Inklination des Erdfeldes anzeigen.

Die Lagerung des Magnetfelddetektors und der Anzeige kann je auf dem Boden und auf dem Deckel sein. Es ist auch möglich beide auf dem Boden oder beide an dem Deckel zu lagern, indem z.B. der Magnetfelddetektor auf einem Spitzenlager und die Anzeige auf der Verlängerung des Spitzenlagers geführt ist.

## Patentansprüche

1. Neigungskompensierender Kompass mit einer mechanischen Anzeige (4) und einem aus einem Permanentmagnetsystem bestehenden spitzengelagerten Magnetfelddetektor (7), die in einem Gehäuse mit Boden (1) und Deckel (2) untergebracht sind, in dem Vakuum herrscht oder das mit einer Flüssigkeit oder mit einem Gas gefüllt ist, **dadurch gekennzeichnet,**
dass die Anzeige (4) und der Magnetfelddetektor (7) getrennt und drehbar gelagert sind,
dass die Anzeige (4) und der Magnetfelddetektor (7) durch einen Mitnehmer (6) und durch ein Gegenstück (5) bewegbar miteinander verbunden sind,
dass der Mitnehmer (6) oder das Gegenstück (5) je mit der Anzeige (4) oder mit dem Magnetfelddetektor (7) fest verbunden sind,
dass der Mitnehmer (6) oder das Gegenstück (5), der bzw. das mit dem Magnetfelddetektor (7) verbunden ist, eine Längsachse hat, die durch den Rotationspunkt des Lagers (8) des Magnetfelddetektors (7) geht, und
dass der Mitnehmer (6) oder das Gegenstück (5), der bzw. das mit dem Magnetfelddetektor (7) verbunden ist, gegenüber dem Gegenstück (5) bzw. Mitnehmer (6) nur in der Neigungsrichtung des Lagers (8) des Magnetfelddetektors frei bewegbar ist.

2. Kompass nach Anspruch 1, **dadurch gekennzeichnet,** dass der Deckel (2) und/oder der Boden (1) aus einem durchsichtigen Material hergestellt sind.

3. Kompass nach einem der Ansprüche 1 bis 2, wobei das Lager (8) des Magnetfelddetektors (7) ein verlängertes Spitzenlager ist, **dadurch gekennzeichnet,** dass der Magnetfelddetektor (7) aus einem oder mehreren Permanentmagneten besteht, die direkt oder über eine Basis das Lager (8) umfassen, wobei die Basis oder der Magnetfelddektor gegenüber einer Verlängerung (9) des Spitzenlagers (8) vom Lager weg so ausgebildet ist, damit die Basis oder der Magnetfelddetektor auch bei größeren magnetischen vertikalen Erdfeldern oder bei einer Neigung des Gehäuses die Verlängerung (9) des Spitzenlagers nicht berührt.

4. Kompass nach einem der Ansprüche 1 bis 3, **dadurch gekennzeichnet,** dass eine von Hand drehbare Referenzeinrichtung, insbesondere Scheibe auf dem Deckel (2) oder auf dem Boden (1) montiert ist, die z.B. den geographischen Nordpol anzeigt.

5. Kompass nach einem der Ansprüche 1 bis 4, **dadurch gekennzeichnet,** dass im Deckel (2) mindestens eine Erhöhung vorgesehen ist zur Unterbringung einer Gasblase, welche die Funktion der Anzeige nicht stört, damit der Kompass z.B. in einem grösseren Temperaturbereich arbeiten kann.

6. Kompass nach einem der Ansprüche 1 bis 5, **dadurch gekennzeichnet,** dass die Neigung des Magnetfelddetektors (7) die Neigung des Kompasses oder den Winkel des vertikalen Erdfeldes anzeigt.

7. Kompass nach Anspruch 3, **dadurch gekennzeichnet,** dass der Magnetfelddetektor (7) oder die Basis ein Langloch aufweist zur Korrektur der horizontalen Lage wegen eines vertikalen Magnetfeldes und dass der Magnetfelddektor (7) insbesondere aus einem Ringmagnet besteht.

8. Kompass nach einem der Ansprüche 1 bis 7, **dadurch gekennzeichnet,** dass das Volumen des Kompasses durch einen reduzierten Durchmesser im Bereich des Magnetfelddetektors (7) verkleinert ist.

9. Kompasse nach einem der Ansprüche 1 bis 8, **dadurch gekennzeichnet,** dass die Anzeige (4) aus einer Nadel, einem Zeiger, einer Scheibe mit oder ohne Teilkreise oder aus einer Codierscheibe besteht und dass sie entweder durch ein Lager (3) geführt ist oder in einer Flüssigkeit schwimmt.

## Claims

1. Inclination compensating compass with a mechanical indicator (4) and a toe borne magnetic field detector (7), comprising a permanent magnet system, which are located in a casing with bottom (1) and cover (2) in which a vacuum prevails or which is filled with a liquid or a gas, characterized in that the indicator (4) and the magnetic field detector (7) are supported separately and rotatable, that the indicator (4) and the magnetic field detector (7) are movably linked with each other by a dog (6) and by a counterpart (5), that the dog (6) or the counterpart (5) are each firmly connected to the indicator (4) or with the magnetic field detector (7), that the dog (6) or the counterpart (5) which is linked to the magnetic field detector (7) has a longitudinal axis which runs through the rotational point of the bearing (8) of the magnetic field detector (7), and that the dog (6) or the counterpart (5) which is linked to the magnetic field detector (7) is freely moveable, opposite the counterpart (5) or dog (6), only in the inclination direction of the bearing (8) of the magnetic field detector.

2. Compass in accordance with Claim 1, characterized in that the cover (2) and/or the bottom (1) are made of a transparent material.

3. Compass in accordance with one of Claims 1 to 2, whereby the bearing (8) is an extended toe bearing, characterized in that the magnetic field detector (7) consists of one or more permanent magnets which encase the bearing (8) directly or via a base, whereby the base or the magnetic field detector are provided in such a manner relative to an extension (9) of the toe bearing (8) and away from the bearing, that the base or the magnetic field detector does not touch the extension (9) of the toe bearing even in the case of greater magnetic vertical earth fields or with the casing inclined.

4. Compass in accordance with one of Claims 1 to 3, characterized in that a manually rotatable reference device, in particular disc, is fitted on the cover (2) or on the bottom (1), indicating, for example, the geographical North Pole.

5. Compass in accordance with one of Claims 1 to 4, characterized in that at least one raised part is provided on the cover (2) for accommodating a gas bubble which does not affect the function of the indicator, so that the compass may, for example, operate within a greater temperature range.

6. Compass in accordance with one of Claims 1 to 5, characterized in that the inclination of the magnetic field detector (7) indicates the inclination of the compass or the angle of the vertical earth field.

7. Compass in accordance with Claim 3, characterized in that the magnetic field detector (7) or the base has an oblong hole for correcting the horizontal position, on account of a vertical magnetic field, and that the magnetic field detector (7) consists of a ring magnet in particular.

8. Compass in accordance with one of Claims 1 to 7, characterized in that the volume of the compass is reduced by a reduced diameter in the region of the magnetic field detector (7).

9. Compass in accordance with one of Claims 1 to 8, characterized in that the indicator (4) consists of a needle, a pointer, a disc with or without partial circles or consists of a coded disc, and that it is either held by a bearing (3) or floats in a liquid.

## Revendications

1. Boussole à compensation d'inclinaison comportant un afficheur mécanique (4) et un détecteur de champ magnétique (7) reposant sur un palier en pointe et constitué d'un système d'aimants permanents, ledit afficheur mécanique (4) étant logé dans un boîtier comportant un fond (1) et un couvercle (2), ledit boîtier étant soumis au vide ou remplis avec un liquide ou un gaz, *caractérisée en ce que,*
- l'afficheur (4) et le détecteur de champ magnétique (7) sont dissociés et montés à rotation,
- l'afficheur (4) et le détecteur de champ magnétique (7) sont liés de façon non rigide par un doigt d'entraînement (6) et une pièce entraînée (5),
- le doigt d'entraînement (6) ou la pièce entraînée (5) est liée de façon rigide avec l'afficheur (4) ou le détecteur de champ magnétique (7),
- ledit doigt d'entraînement (6) ou ladite pièce entraînée (5), qui est lié(e) avec le détecteur de champ magnétique (7) présente un axe longitudinal qui passe par le point de rotation du palier (8) du détecteur de champ magnétique (7),
- le doigt d'entraînement (6) ou la pièce entraînée (5), qui est lié(e) avec le détecteur de champ magnétique (7) n'est mobile librement, respectivement par rapport à la pièce entraînée (5) ou au doigt d'entraînement (6), que dans la direction d'inclinaison du palier (8) du détecteur de champ magnétique.

2. Boussole selon la revendication 1, *caractérisée en ce que,* le couvercle (2) et/ou le fond (1) sont fabriqués en un matériau transparent.

3. Boussole selon la revendication 1 ou 2, dans laquelle le palier (8) du détecteur de champ magnétique (7) est un palier en pointe rallongé, *caractérisée en ce que* le détecteur de champ magnétique (7) consiste en un ou plusieurs aimants permanents qui entourent directement ou par l'intermédiaire d'une base, le palier (8), de façon à ce que la base ou le détecteur de champ magnétique soit suffisamment éloigné d'un prolongement (9) du palier en pointe (8) pour que ladite base ou ledit détecteur de champ magnétique (7) ne vienne pas toucher ledit prolongement (9) du palier en pointe (8) même par champ magnétique terrestre vertical important ou en cas d'inclinaison du boîtier.

4. Boussole selon l'une quelconque des revendication 1 à 3*, caractérisée en ce qu*'un dispositif de référence pouvant être tourné à la main, et plus particulièrement un disque, est monté sur le couvercle (2) ou sur le fond (1) et indique par exemple le pôle nord.

5. Boussole selon l'une quelconque des revendication 1 à 4, *caractérisée en ce qu*'au moins un réhaussement est prévu dans le couvercle (2) pour le logement d'une bulle de gaz, ladite bulle ne perturbant pas le fonctionnement de l'afficheur, afin que la boussole puisse fonctionner dans un plus grand domaine de température.

6. Boussole selon l'une quelconque des revendication 1 à 5, *caractérisée en ce que* l'inclinaison du détecteur de champ magnétique (7) représente l'inclinaison de la boussole ou l'angle du champ magnétique terrestre vertical.

7. Boussole selon la revendication 3, *caractérisée en ce que* le détecteur de champ magnétique (7) ou la base présente un trou oblong pour la correction de la position horizontale en présence d'un champ magnétique vertical et en ce que le détecteur de champ magnétique (7) consiste plus particulièrement en un aimant torique.

8. Boussole selon l'une quelconque des revendication 1 à 7, *caractérisée en ce que* le volume de la boussole est diminué grâce à une réduction de diamètre dans la zone comportant le détecteur de champ magnétique (7).

9. Boussole selon l'une quelconque des revendication 1 à 8, *caractérisée en ce que* l'afficheur (4) consiste en une aiguille, un index, un disque avec ou sans cercle gradué ou en un disque codé et en ce qu'il est guidé par un palier (3) ou flotte dans un liquide.
